# EUROPEAN PATENT APPLICATION

(11) **EP 1 495 813 A1**
(43) Date of publication of application: **12.01.2005**
(21) Application number: 04076941.6
(22) Date of filing: 06.07.2004
(51) Int. Cl.: B08B 7/02, B01J 8/18

(54) **Washing plant for mechanical components**

(30) Priority: 07.07.2003 IT MI20031386
(71) Applicant: Forni-Tecnica S.r.l., 20125 Milan (IT)
(72) Inventor: Zamboni, Alberto, 20155 Milan (IT); Barletta, Massimiliano, 00174 Rome (IT); Spagocci, Stefano Maria, 20092 Cinisello Balsamo (Milan) (IT); Teruzzi, Alessandro, 20060 Cassina de'Pecchi (Milan) (IT)
(74) Representative: Coppo, Alessandro

(57) **Abstract**

A plant for washing mechanical components, including a device for moving said components and characterized in that it includes at least a fluidized bed, including at least a chamber, wherein a powder, made up of solid particles, is contained, and an inlet duct, aimed at allowing inlet of said fluidizing gas into said chamber and fluidizing said powder.

## Description

The present invention relates to a washing plant for mechanical components.

In particular, the present invention relates to a washing plant for mechanical components such as, for example, metallic parts, previously worked and covered by a veil of lubricating oil, coming from such working process.

At the present state of the art, washing plants for mechanical components, including either washing machines (made up of a washing section, a rinsing section and a drying section) or degreasing furnaces, are known. In a washing machine, washing takes place through alkaline solutions or, sometimes, ultrasounds. In other cases, for example in the washing machines employed in screen-printing, solvents are used. In other cases again, degreasing furnaces are employed.

Applicant has observed that such plants are generally very big, since a washing machine or furnace takes up lots of space, due to the unavoidable presence of powerful motors, moving systems, heating systems etc. that, in addition, use up lots of power.

Furnace-based washing plants are characterized by transitories in both switching on and off operations, during which the plant is not fully working and therefore cannot be used again in a short time.

Applicant has built a modular plant for washing metallic components that employs a small-sized fluidized bed, wherein the components are washed. By modular plant we mean that the fluidized bed can be composed of a plurality of essentially identical modules that can be considered as a fluidized bed, if taken as a whole.

An embodiment of present invention relates to a washing plant for mechanical components, including a device for moving said components, characterized in that it includes at least a fluidized bed, including at least a chamber, wherein a powder, composed of solid particles, is placed, at least a flow distributor and an inlet duct, aimed at allowing inlet of a fluidizing gas into said chamber and fluidizing said powder, and at least a lateral opening, for inserting said mechanical components to be washed into said chamber, through which said moving device operates. In the case of one only lateral opening, the plant operates by treating single batches ("batch" working regime). In the opposite case, the plant can also operate in a continuous fashion.

Further objects and advantages of the present invention shall become clear from the description below and appended drawings, provided purely as a non-limiting explanatory example, wherein:
figure 1 is a schematic lateral view of a plant for washing mechanical components, according to the present invention;
figure 2 is a schematic front view of a plant for washing mechanical components, according to the present invention;
figure 3 is a graph, showing the washing degree of the mechanical components treated in a prototype of said plant.

With reference to the above-mentioned figures, a plant for washing mechanical components, used, for example, for degreasing metallic components, is described. Such plant includes a fluidized bed, inside which said elements to be degreased are transported by a suitable moving device, such that the pieces go in and out of the washing plant through two opposite lateral openings.

Said fluidized bed includes a container 2, of set length, partitioned into a plurality of sections, each one including a chamber 21, 22, 23, 24 and 25, wherein a powder, made up of solid particles, is deposited, a flow distributor 31, 32, 33, 34 and 35, and an inlet duct 41, 42, 43, 44 and 45, for a fluidizing gas. Such fluidizing gas can be, for example, compressed air, driven into such duct by a compressor.

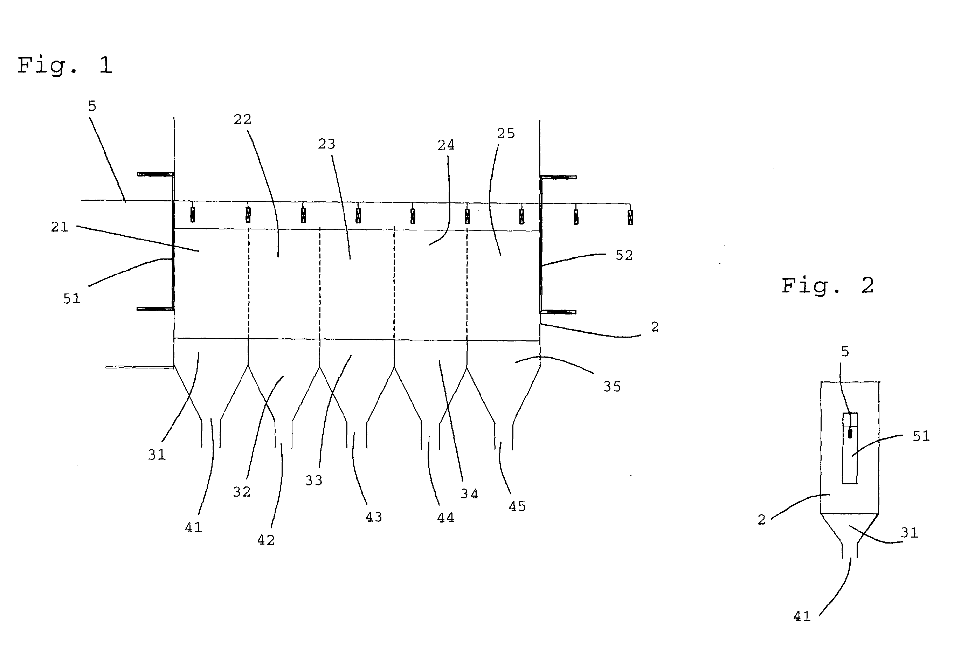

In the example of figure 1, five sections are shown; in the framework of the present invention, the fluidized bed can, equivalently, include both one and only one section and a number of sections greater than five, according to the degreasing extent that is to be achieved, according, in turn, to the quantity and type of the metallic elements to be treated.

Said degreasing plant includes, as well, at least two opposite lateral openings 51 and 52, including, for example, a device that generates a laminar air flow, that prevents the particles from escaping, without obstructing piece entrance. Said openings have the aim of allowing insertion of said elements to be degreased into said chamber, through which said moving device 5 operates. This moving device can be realized, for example, by a conveyor belt, suitably driven by an electrical motor.

A fluidized bed operates in the following way.

The gaseous flow, for example compressed air injected into such ducts, after being driven into suitable flow-dynamic conditions by said flow distributor, sets the solid particles in the powder into random motion, and the whole assembly behaves as if it were a liquid, in the laminar or turbolent regime. The intimate contact between particles and fluid can be exploited for various applications.

If, for example, the abrasive action of the powders is exploited, the fluidized bed can be employed for such operations as painting, de-painting or, in the case of the invention described here, washing and, more generally, degreasing, of mechanical components.

The flow-dynamic regime inside the fluidized bed includes different phases, according to the fluidizing gas flow rate, all other parameters, such as fluidized bed dimensions and particle physical and geometrical properties, being equal.

Such phases are known as: "fixed bed", "bubbling regime", "slugging regime", "turbolent regime", "fast fluidization", "pneumatic conveying".

The transition from a regime to the next one takes place when gas velocity, and consequently vacuum degree, increases. Thus, from a regime wherein the powders act as a "plug" for the fluid, one meets a regime wherein the particles are just expelled from the fluidized bed by the flow. Both extreme regimes, of course, are of no practical interest, while there is interest for the intermediate regimes.

The minimum fluidization regime is characterized by a threshold velocity called, accordingly, "minimum fluidization velocity". Such a velocity is related to the gas throughput that is able to balance particle weight and, accordingly, allows the particles to float.

The regime that is achieved after the minimum fluidization regime, as throughput grows, is the bubble regime. According to the different kinds of particles employed, one has a transition field of different width between the two regimes. In the case of the bubble regime, the fluidized area is characterized, in turn, by a two-phase structure, made up of the emulsion and the bubbles. The emulsion is the dense phase and is made up of particles in the minimum fluidization regime. The second phase is made up of bubbles. The bubbles are formed when gas throughput exceeds the minimum fluidization condition. The excess gas passes through the emulsion in the shape of bubbles and is freed at the upper surface. The fluid/powder emulsion, instead, stays at a constant height, depending on the operating conditions.

The flow distributor is aimed at generating said regimes and allowing abrasion, and consequentlly degreasing, of the metallic components in the bed.

Applicant has realized a prototype fluidized bed with the following parameters: lenght 2 meters, width 40 centimeters, made up of five sections, each one 40 centimeters long. The bed has two lateral ducts, for channelling the elements to be degreased.

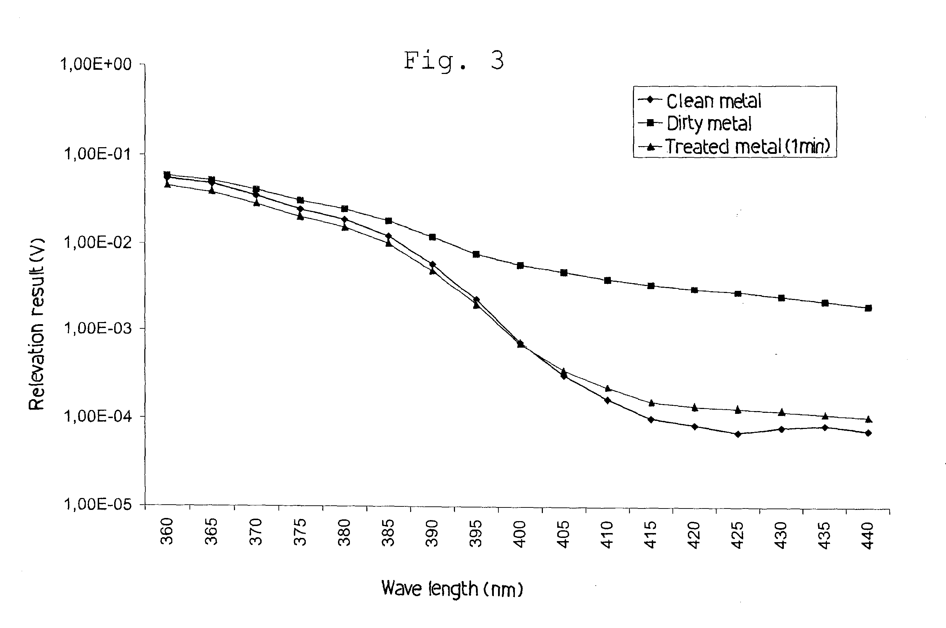

The performed tests, exemplified in the fluorescence diagram shown in figure 3, led to the request of a transit time in the bed of 1 minute for each element. The distance between two elements is 2 centimeters. It was found that such a distance is more than enough for avoiding jamming problems, while insuring efficient degreasing for 6000 pieces per hour.

The graph was obtained by fluorescence. In the experiment synthetized by such graph, the elements are exposed to electromagnetic radiation of variable wavelength. The extent of piece degreasing can be inferred from the intensity of the reflected radiation. In fact, the intensity of the reflected radiation at a given angle is made up of two contributions: the reflected radiation in the strict sense (a function of the wavelength of the impinging radiation) and the fluorescence radiation emitted by the oil. Of course, as shown in figure 3, the fluorescence signal is lost if the oils are wholly removed. In particular, it can be noticed that, after treatment in the fluidized bed, the y-axes indicator is quite similar for both the clean and the treated metal pieces.

An abrasion powder made up of glass microspheres, with a diameter of 600-700 micrometers and deposited, for a thickness of about 40 centimeters, on the flow distributor, in turn made up of a metallic grid (but polymer-based grids might also be used) that prevents the powders from leaking out of the bed and, at the same time, allows the compressed air to enter the bed through the flow distributor, was employed in the fluidized bed.

The bed is placed under a suction hood, aimed at sucking the oil removed from the pieces and injected into the atmosphere by the fluidizing gas. The plant also includes a device for the post-combustion of such oil residuals, sucked by said hood.

Further advantages of the present invention can be conveniently summarized as follows:
- less taken up space, as compared to the conventional washing approaches;
- consequently, smaller selling price;
- less used up power, as compared to the conventional washing approaches;
- consequently, smaller plant running costs;
- modular plant structure;
- as a consequence of this, possibility of plant upgrading, in the event of growing production;
- possibility of only employing some of the modules, thus saving on power;
- absence of thermal transitories that, in degreasing furnaces, prevent the machine from being switched on and off rapidly;
- possibility of only switching on the plant when needed, thus saving on power;
- waterless washing, with the related ecological advantages.

In order to support the previous claims, Applicant, in the following table, has compared the taken up space and hourly power cost data of a fluidized bed to the same data for a state-of-the art washing machine and furnace. It has to be noticed that all these systems need a device for moving the pieces to be washed, and so the space and hourly power cost of such devices were not included in the table.

| | **Fluidized Bed** | **Washing Machine** | **Furnace** |
|---|---|---|---|
| Length | 2 m | 4.1 m | 5.2 m |
| Width | 0.4 m | 2.1 m | 1.4 m |
| Height | 1.2 m | 3.2 m | 2.4 m |
| Consumption | 18 kWh | 213 kWh | 16 m³/h CH₄ |

In the following table, instead, the taken up floor space and volume and hourly power cost (running cost) data for the three solutions are compared.

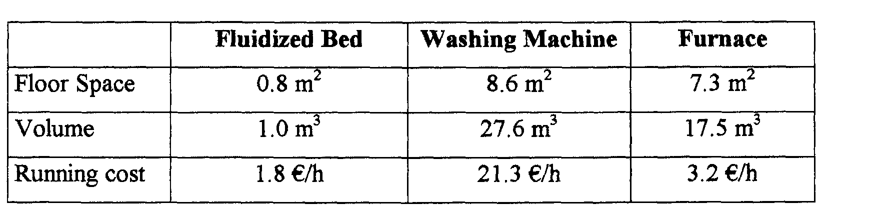

Finally, in the following table, the taken up floor space and volume and hourly power cost (running cost) data for the three solutions are compared on a relative scale. Finally, Applicant points out that the taken up space and hourly running cost data of a washing machine, that seem to be less advantageous as compared to those of a furnace, are due to the already-mentioned presence, in this device, of the three washing, rinsing and drying stages. However, these stages are essential in a washing machine.

| | **Fluidized Bed** | **Washing Machine** | **Furnace** |
|---|---|---|---|
| Floor Space | 1.0 | 10.8 | 9.1 |
| Volume | 1.0 | 27.6 | 17.5 |
| Running cost | 1.0 | 11.8 | 1.8 |

## Claims

1. Plant for washing mechanical components, including a device for moving such mechanical components, **characterized in that** it includes at least a fluidized bed, including
• at least a chamber, wherein a powder, made up of solid particles, is placed,
• at least a flow distributor and an inlet duct, aimed at injecting a fluidizing gas in said chamber and fluidizing such powder,
• at least a lateral opening, aimed at inserting said metallic elements to be degreased into said chamber, through which said moving device operates.

2. Plant according to claim 1, wherein said fluidizing gas is compressed air.

3. Plant according to claim 1, wherein said powder is made up of glass microspheres.

4. Plant according to claim 1, wherein said flow distributor includes a metallic grid that prevents the powders from leaking out of the fluidized bed and allows the fluidizing gas to enter the fluidized bed.

5. Plant according to claim 1, wherein said flow distributor includes a grid made up of a polymeric material that prevents the powders from leaking out of the fluidized bed and allows the fluidizing gas to enter the fluidized bed.

6. Plant according to claim 1, wherein said fluidized bed is a modular fluidized bed, including a plurality of chambers, placed inside a container, each one equipped with a flow distributor and an inlet duct for the fluidizing gas.

7. Plant according to claim 1, also including a suction hood, aimed at sucking the degreasing residuals.

8. Plant according to claim 7, also including a device for the combustion of such residuals, removed from the mechanical components and sucked by said hood.
